# EUROPÄISCHE PATENTSCHRIFT

(11) **EP 1 820 381 B1**
(45) Veröffentlichungstag und Bekanntmachung des Hinweises auf die Patenterteilung: **03.07.2013**
(21) Anmeldenummer: 07003180.2
(22) Anmeldetag: 15.02.2007
(51) Int. Cl.: A01C 5/06

(54) **Sämaschine zum reihenweisen Einbringen von Saatgut in den Boden**
Sowing machine for sowing seed in rows in the ground
Machine à semer destinée à l'introduction en rangées de semences dans le sol

(30) Priorität: 18.02.2006 DE 102006007624; 24.02.2006 DE 102006009124
(43) Veröffentlichungstag der Anmeldung: 22.08.2007
(73) Patentinhaber: RAUCH Landmaschinenfabrik GmbH, 76547 Sinzheim (DE); KUHN S.A., 67700 Saverne (FR)
(72) Erfinder: Klein, Frédéric, 67500 Hagenau (FR); Schickinger, Manfred, 76547 Sinzheim (DE)
(74) Vertreter: Lenz, Steffen

(56) Entgegenhaltungen:
- WO-A-01/54484
- WO-A-88/05997
- WO-A-2004/112456
- DE-C1- 3 808 916
- DE-U1- 29 714 900
- GB-A- 1 573 615

## Beschreibung

Die Erfindung betrifft eine Sämaschine mit den Merkmalen des Oberbegriffs des Anspruchs 1.

Sämaschinen gibt es im Wesentlichen in zwei Ausführungen, nämlich als Kastensämaschine und als pneumatische Sämaschine. In beiden Fällen wird das Saatgut auf Särohre einzeln dosiert und gelangt im ersten Fall durch Schwerkraft in die Saatgutführung des Säschars, im zweiten Fall durch die pneumatische Förderluft. Im ersten Fall weist die Saatgutführung an ihrem oberen Ende einen trichterförmigen Einlauf für das in dessen Bereich endende Särohr auf, während im zweiten Fall die Saatgutführung des Säschars einen erweiterten Durchmesser aufweist, in den das pneumatische Särohr eingesteckt ist. Unabhängig vom vorgenannten Aufbau der Sämaschine wird das Saatgut mittels Schleppscharen oder mittels Scheibenscharen in die von diesen vorbereiteten Säfurchen abgelegt. Schleppschare werden überwiegend in Verbindung mit einer vorangehenden, herkömmlichen Bodenbearbeitung eingesetzt, während Scheibenschare sowohl bei einer solchen Bodenbearbeitung, als auch für eine sogenannte Mulchsaat geeignet sind, bei der die von der Vorernte verbleibenden Pflanzenreste noch auf dem Boden liegen und der Boden zur Vorbereitung des Saatbettes allenfalls leicht aufgelockert wird.

Die Erfindung befasst sich ausschließlich mit Scheibenscharen, die aus einer in den Boden eindringenden, dabei die Pflanzenreste teilweise zerschneidenden und seitlich verdrängenden und die Säfurche bildenden Scharscheibe und einem das Saatgut vom Särohr übernehmenden und in die Säfurche leitenden Säschar bestehen. Voraussetzungen für eine erfolgreiche Keimung sind eine ausreichende Wasserversorgung, eine optimale Sauerstoffversorgung und eine der Pflanzenart angepasste Keimtemperatur. Alle drei Keimfaktoren werden von der Ablagetiefe beeinflusst. Eine zunehmende Ablagetiefe erhöht die Keimwasserversorgung, vermindert aber das Sauerstoffangebot im Boden. Außerdem erreicht die von der Sonne ausgelöste Bodenerwärmung bei einer größeren Ablagetiefe das Saatgut später. Eine präzise Saatgutverteilung sichert ferner eine gute Standraumverteilung der Pflanzen für optimales Wachstum. Zu geringe Abstände der Saatgutkörner können zu Wassermangel und Konkurrenzverhalten unter den Pflanzen führen, zu große Abstände reduzieren den Ertrag und begünstigen den Einschuss von Unkraut. Unabhängig vom Aufbau des Einbringorgans (Schleppschar oder Scheibenschar) werden diese Voraussetzungen nur durch eine konstante Ablagetiefe und einen gleichmäßigen Ablageabstand des Saatgutes erfüllt.

Bei Scheibenscharen wird zwischen Doppelscheibenscharen (z.B. DE 44 19 94 A1) und Einscheibenscharen (z.B. DE 38 08 916 C1, DE 297 14 900 U1) unterschieden. Im ersten Fall sind die beiden Scheiben unter einem gleichen, jedoch entgegengesetzten Winkel gegenüber der Fahrtrichtung angestellt. Die Scheiben können einen unterschiedlichen Durchmesser aufweisen. Bei Einscheibenscharen erfolgt die Furchenbildung im Wesentlichen nur durch die gegenüber der Fahrtrichtung winklig angestellte Scharscheibe, wobei die Furchenräumung durch das Säschar unterstützt werden kann. Einscheibenschare sind aufgrund ihrer einfacheren Konstruktion leichter und wesentlich preisgünstiger. Beides hat aufgrund der hohen Anzahl von 24 Scharen und mehr pro Sämaschine eine hohe Bedeutung. Die Erfindung betrifft deshalb ausschließlich Einscheibenschare.

Solche Einscheibenschare sind aus der Praxis bekannt, beispielsweise aus dem DE-Prospekt "OPTILINE MP" der Firma Sulky-Burel, Chäteaubourg/Frankreich (Druckvermerk 07/2003-D/OMP-00) und dem FR-Prospekt "LS 2.30 Unidisc" derselben Firma (Druckvermerk 08/2004-F/UN-00). Die bekannte Scharscheibe ist in Fahrtrichtung winklig angestellt, um das Eindringen in den Boden zu erleichtern. Ferner ist die Scharscheibe gegenüber der die Säfurche einschließenden Vertikalebene gegenüber dem Aufstandpunkt der Scharscheibe nach außen geneigt. Das die Drehachse für die Scharscheibe tragende Säschar befindet sich überwiegend seitlich der Scharscheibenkontur und weist insbesondere einen diese Kontur nennenswert überragenden Furchenbildner für die eine Seite der Säfurche auf, hinter dem die Saatgutführung des Säschars ausmündet. Bei dieser Ausbildung gelangt das vom vorlaufenden Furchenbildner verdrängte Erdreich unmittelbar dahinter in die Säfurche, so dass das Saatgut nicht sicher den Furchengrund erreicht, da die unmittelbar hinter dem Säschar zusammenfließende Erde den Zugang zum Furchengrund versperrt bzw. das Saatgut in diesen Erdstrom abgelegt wird. Außerdem bleiben Saatgutkörner an der Innenseite der gewölbten Scharscheibe haften und werden deshalb von dieser mit nach oben genommen. Bei pneumatischen Sämaschinen wird das von der Förderluft ausgebrachte Saatgut leicht wieder aus der Furche geblasen. Schließlich ergibt sich durch die starke Erdbewegung ein erhöhter Verschleiß der Scharscheibe und des Säschars und ein erhöhter Zugwiderstand des Säschars.

Die vorgenannten Nachteile werden zumindest teilweise durch eine andere bekannte Ausführung (DE 297 14 900 U1- Rabewerk) vermieden. Bei dieser ist das Säschar mit einer in ihrem unteren Bereich befestigten Scharkufe derart angeordnet und ausgebildet, dass es über eine auf eine zur Fahrtrichtung senkrechte Ebene projizierte Fläche der angestellten Scharscheibe nicht hinausragt. Durch diese Ausbildung liegt das Säschar im Betrieb mit seinem Bodenberührung erhaltenden Bereich stets im "Strömungsschatten" der Scharscheibe. Bei der Furchenbildung wirkt aber das Säschar nicht aktiv mit. Die Innenseite der gewölbten Scharscheibe ist durch eine ortsfeste Kreisscheibe abgedeckt, die bis nahe an den Umfang der Scharscheibe reicht. Sie soll das Eindringen und Aufwickeln von Pflanzenresten zwischen Scharscheibe und Säschar verhindern. Die Scharkufe liegt mit ihrem unteren Scheitel mit Abstand oberhalb der Sohle der allein von der Scharscheibe gebildeten Säfurche, so dass auch deren Tiefe und Breite ausschließlich von der winklig ausgestellten Scharscheibe bestimmt wird. Dadurch kann das Erdreich an der der Scharscheibe gegenüberliegenden Seite wieder in die vorbereitete Säfurche einfließen. Die Auslauföffnung der Saatgutöffnung ist gegenüber dem Aufstandpunkt der Scharscheibe entgegen der Fahrtrichtung nach hinten und oben versetzt. Ihr Öffnungsquerschnitt liegt in einer senkrechten Ebene und die Unterkante der Auslauföffnung etwa auf halber Höhe der Säfurchentiefe. Dadurch ist eine gleichbleibende Ablagetiefe bei regelmäßigem Saatkornabstand und gleicher späterer Bodenüberdeckung nicht gewährleistet.

Bei einem den Oberbegriff des Anspruchs 1 bildenden Stand der Technik (DE 38 09 916 C1) reicht die Saatgutführung bis etwa zum furchenbildenden Scheitel der Scharscheibe und weist das Säschar einen die Auslauföffnung der Saatgutführung an der der Scharscheibe gegenüberliegenden Seite gegen das Erdreich schützenden und das Saatgut auf die Sohle der Säfurche führenden Leitflügel auf.

Dadurch, dass die Saatgutführung und damit auch deren Auslauföffnung nicht mit nennenswertem Abstand in bzw. oberhalb der Säfurche endet, sondern bis etwa zum furchenbildenden Scheitel der Scharscheibe reicht, ist gewährleistet, dass die Saatgutkörner unmittelbar oberhalb der Sohle der Säfurche in diese abgegeben werden. Dies wird noch dadurch unterstützt, dass der Leitflügel an der der Scharscheibe gegenüberliegenden Seite die Auslauföffnung der Saatgutführung gegen das Erdreich der Furchenwand schützt. Damit werden das Saatgut behinderungsfrei auf die Sohle der Säfurche geführt und die Saatkörner in der vorgegebenen Furchentiefe in gleichmäßigem Abstand abgelegt. Zugleich verhindert der Leitflügel das Eindringen von Erdreich in die vorbereitete Säfurche, so dass bei gleichbleibender Ablagetiefe auch eine gleichbleibende Bodenüberdeckung beim Schließen der Säfurchen durch die nachlaufenden Striegel oder Andrückrollen der Sämaschine gewährleistet ist. Ferner ist sichergestellt, dass insbesondere auch bei der Mulchsaat sich aufstellende Pflanzenreste nicht in den Bereich der Saatgutablage gelangen.

Gemäß der Erfindung ist vorgesehen, dass die Saatgutführung an ihrem unteren Ende im Bereich des Aufstandpunktes der Scharscheibe in einer Spitze ausläuft und nur nach unten und entgegen der Fahrtrichtung offen ist und von ihrem spitz zulaufenden Ende nahe dem Aufstandpunkt der Scharscheibe ausgehend eine auf einem degressiven Radius bezüglich der Drehachse der Scharscheibe liegende Außenkontur aufweist. Im Raum zwischen der Innenseite des Leitflügels und der Innenseite der Scharscheibe muss bei einer pneumatischen Sämaschine die Förderluft abgeführt werden. Damit dies für die Saatgutablage störungsfrei gelingt, erweitert sich der zur Verfügung stehende freie Querschnitt von dem spitz zulaufenden Ende der Saatgutführung nach hinten und oben aufgrund des degressiven Radius' der Saatgutführung.

Mit Vorteil weist die Saatgutführung einen oberen, mit dem Särohr zusammenwirkenden rohrförmigen Abschnitt auf, der über einen im Wesentlichen kontinuierlich gekrümmten Bogen zum spitz zulaufenden Ende verläuft.

In besonders vorteilhafter Ausführung ist vorgesehen, dass die Saatgutführung von ihrem nahe dem Aufstandpunkt der Scharscheibe befindlichen spitz zulaufenden Ende ausgehend schräg angeschnitten ist, so dass sich eine Auslauföffnung bildet, die einen von dem spitz zulaufenden Ende des Säschars ausgehenden und entlang der Außenkontur schließlich durch einen elliptischen Bogen geschlossenen Umriss aufweist. Damit weist die Auslauföffnung einen ausreichend großen Querschnitt auf, um das Saatgut einwandfrei ausbringen zu können.

Vorzugsweise beträgt der Anstellwinkel der Scharscheibe maximal etwa 10°. Ferner steht die Scharscheibe vorzugsweise vertikal, da hierdurch die Schnittkräfte der Scharscheibe optimal genutzt werden.

Ferner ist mit Vorteil vorgesehen, dass die Saatgutführung im Bereich ihres der Fahrtrichtung zugekehrten vorderen unteren Endes eine zum spitz zulaufenden Ende führende, ebene Leitfläche für das Saatgut aufweist. Die ebene Leitfläche sorgt insbesondere bei einer pneumatischen Förderung des Saatgutes dafür, dass die Saatgutkörner an dieser Leitfläche nach unten in die Säfurche geleitet werden, so dass eine einwandfreie Ablage bei Einhaltung des gewünschten Kornabstandes gewährleistet ist.

Bei pneumatischen Sämaschinen ist die Saatgutführung nahe der Austrittsöffnung so ausgeführt, dass das Saatgut in der Säfurche abgelegt und die Förderluft in der Säfurche nach hinten abgelenkt wird, wobei eine einwandfreie Abführung der Förderluft durch den zunehmend größer werdenden Querschnitt zwischen dem Leitflügel und der Scharscheibe einerseits und der in Radialrichtung zurückfliehenden Außenkontur der Saatgutführung andererseits unterstützt wird.

Nachstehend ist die Erfindung anhand eines in der Zeichnung wiedergegebenen bevorzugten Ausführungsbeispiels beschrieben. In der Zeichnung zeigen:
- Fig. 1: eine Explosionsdarstellung der im Zusammenhang mit der Erfindung maßgeblichen Bauteile;
- Fig. 2: eine Ansicht des Scheibenschars mit Blickrichtung auf die Innenseite der Scharscheibe;
- Fig. 3: eine Ansicht auf das Scheibenschar von oben;
- Fig. 4: ein Schnitt IV/IV gemäß Fig. 2;
- Fig. 5: eine Ansicht auf das Scheibenschar in Fahrtrichtung von hinten;
- Fig. 6: eine der Fig. 5 entsprechende Ansicht unter einem zur Fahrtrichtung stärker geneigten Blickwinkel und
- Fig. 7: eine der Fig. 1 entsprechende Darstellung der Einzelteile des Scheibenschars.

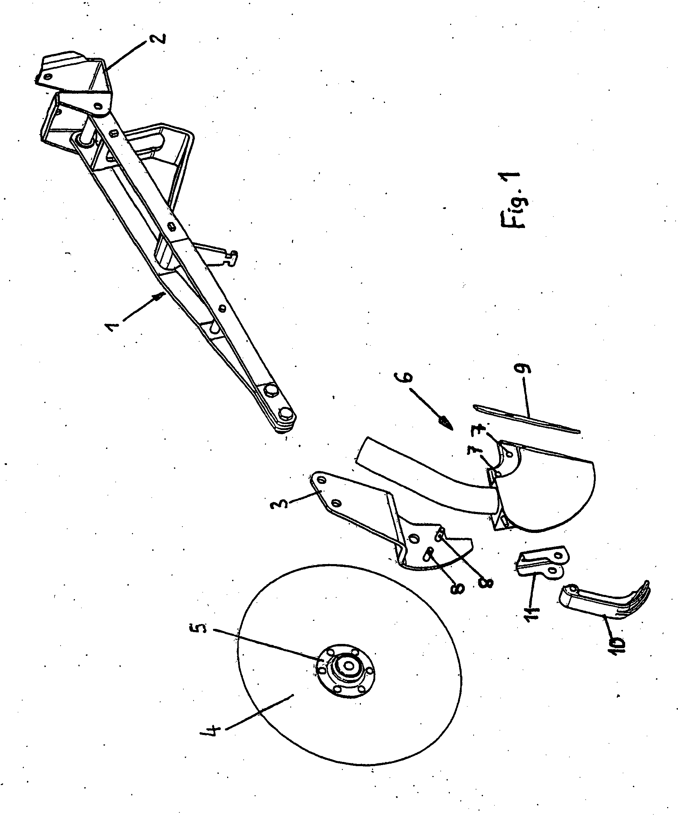

In Fig. 1 ist ein Scharträger 1 einer Sämaschine gezeigt, der mit einem Profil 2 an einer nicht gezeigten Scharschiene befestigt ist. Am freien Ende des Scharträgers 1 ist ein Scharhalter 3 befestigt, der ein Scheibenschar trägt. Das Scheibenschar besteht aus einer Scharscheibe 4 mit einem Lagerflansch 5, über den die Scharscheibe 4 am Scharhalter 3 drehbar gelagert ist, und einem insgesamt mit 6 bezeichneten, feststehenden Säschar. Das Säschar 6 ist mittels Bohrungen 7 an Zapfen 8 des Scharhalters 3 befestigt. In Fahrtrichtung vor dem Säschar 6 ist ein Abstreifer 9 angeordnet, während in Fahrtrichtung hinter dem Säschar 6 eine Rücklaufsperre 10 an einem am Säschar 6 befestigten Lagerbock 11 schwenkbar gelagert ist. Nachfolgend sind weitere Einzelheiten des Scheibenschars beschrieben.

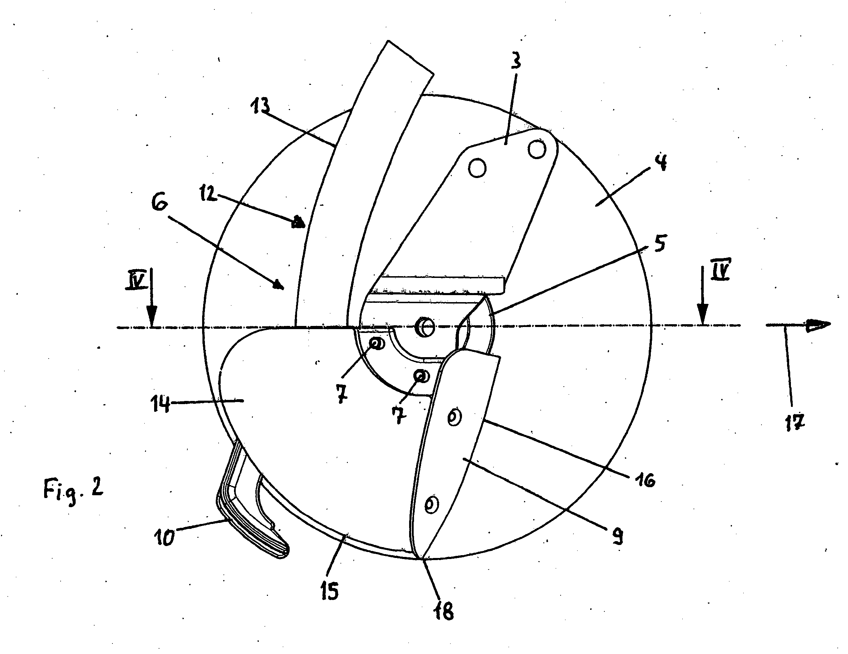

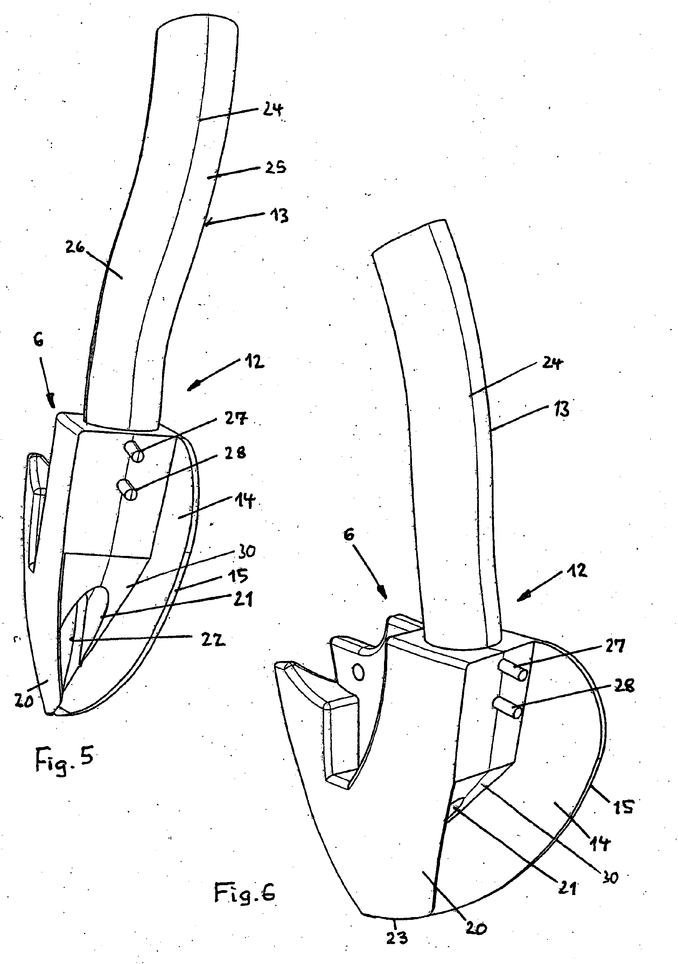

In Figur 2 ist erkennbar, dass das Säschar 6 eine Saatgutführung 12 mit einem rohrförmigen Abschnitt 13 aufweist, der an das in Figur 1 nicht gezeigte Särohr der Sämaschine angeschlossen ist, über die das Saatgut mittels Schwerkraft oder pneumatisch zugeführt wird. Die Saatgutführung 12 weist einen Leitflügel 14 an der der Scharscheibe 4 gegenüberliegenden Seite auf, der nahe dem Aufstandpunkt der Scharscheibe 4 ansetzt, sich beim gezeigten Ausführungsbeispiel über einen Bogenwinkel von ca. 90° erstreckt und einen Großteil der Saatgutführung 12 überdeckt. Seine Außenkante 15 liegt auf einem Radius, der etwa dem der Scharscheibe 4 entspricht (Figur 2). Weitere Einzelheiten hierzu ergeben sich aus der Beschreibung der Figuren 5 und 6. Wie weiterhin aus Figur 2 ersichtlich, sitzt in Fahrrichtung vor dem Leitflügel 14 der Abstreifer 9, der mittels zweier Bohrungen entweder direkt am Säschar 6 oder auch an einem entsprechenden Flansch des Scharhalters auswechselbar befestigt ist. Der Abstreifer 9 weist in Fahrtrichtung 17 (Laufrichtung der Scharscheibe) eine Abstreiferkante 16 auf, die mit minimalem Abstand der gewölbten oder konischen Innenform der Scharscheibe 4 folgt und in einer Spitze 18 am Aufstandpunkt der Scharscheibe 4 endet. Die Saatgutführung 12 läuft mit ihrem unteren Ende - in Figur 2 nicht erkennbar - im Bereich der Spitze 18 des Abstreifers 9 aus.

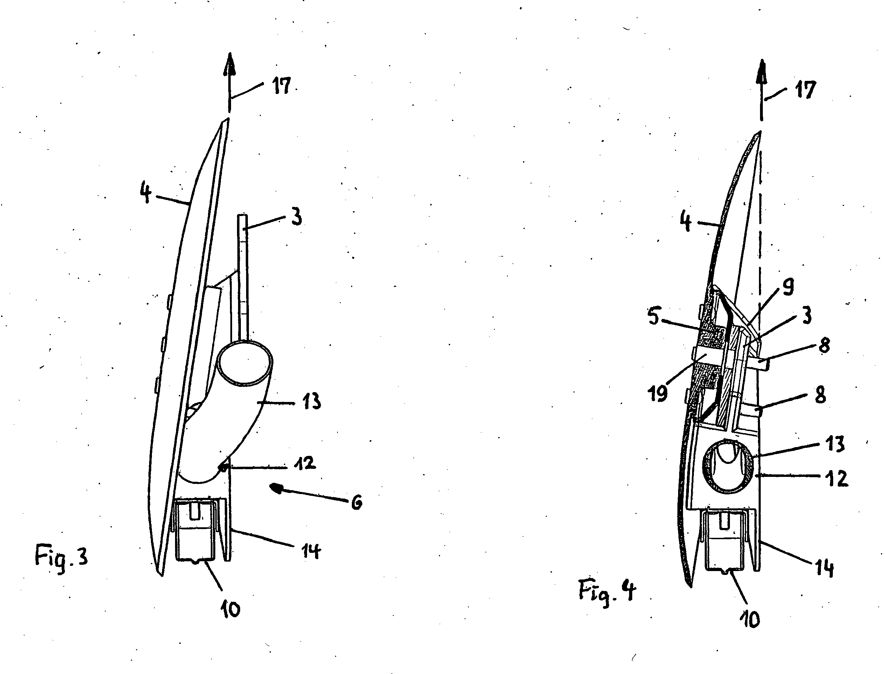

Das Scheibenschar ist, wie aus Figur 3 erkennbar gegenüber der Fahrtrichtung 17, die der Laufrichtung der Scharscheibe 4 entspricht, unter einem Winkel angestellt, der beispielsweise bis zu 10° reicht. Aus dem Horizontalschnitt des Scheibenschars gemäß Figur 4 ist ersichtlich, dass alle unterhalb der Schnittebene IV-IV (Figur 2) liegenden Bauteile des Säschars 6 innerhalb der Kontur der angestellten Scharscheibe 4 liegen. Die von dem Säschar 6 auf eine Ebene senkrecht zur Fahrrichtung 17 projizierte Fläche liegt innerhalb der winklig angestellten Scharscheibe 4. Dies ist in Figur 4 mit der gestrichelt wiedergegebenen Linie angedeutet. Die Scharscheibe 4 dreht um eine zu ihrem Anstellwinkel senkrecht angeordnete Achse, die durch einen am Scharhalter 3 lösbar befestigten Zapfen 19 gebildet ist.

Das Säschar 6 weist, wie aus Figur 5 und 6 ersichtlich ist, neben der Saatgutführung 12 mit dem rohrförmigen Abschnitt 13 und dem Leitflügel 14 an der gegenüberliegenden, scheibennahen Seite ein Leitorgan 20 auf. Die Saatgutführung 12 ist innerhalb der Umrisskante des Leitflügels 14 nach unten geführt und im Bereich des unteren Endes schräg angeschnitten, so dass an ihrer Außenkontur 30 mit degressivem Radius bezüglich der Drehachse eine Auslauföffnung 21 gebildet wird, die sich von einem elliptischen Bogen zunächst erweitert und dann zwischen Leitflügel 14 und Leitorgan 20 nach unten ausläuft. An der der angeschnittenen Schrägfläche gegenüberliegenden Seite weist die Saatgutführung 12 eine in die Spitze der Saatgutführung führende ebene Leitfläche 22 für das Saatgut auf. Das Leitorgan 20 weist eine Außenkante 23 auf, die auf einem Radius bezüglich der Drehachse liegt, der etwa dem der Scharscheibe entspricht. Der Leitflügel 14 und das Leitorgan 20 führen die durch die Auslauföffnung 21 austretenden Saatgutkörner auf die Sohle der von der Scharscheibe gebildeten Säfurche, so dass sie in der gewünschten Tiefe und mit dem gewünschten regelmäßigen Abstand abgelegt werden. Der Leitflügel 14 und das Leitorgan 20 weisen untereinander einen von der Spitze 18 ausgehend nach oben zunehmenden Abstand auf.

Bei dem gezeigten Ausführungsbeispiel ist das gesamte Säschar 6 aus Kunststoff, und zwar aus zwei Halbschalen gefertigt, die entlang einer Trennfuge 24 (Figur 5) in herkömmlicher Weise zusammengefügt sind. Im Bereich des rohrförmigen Abschnittes 13 der Saatgutführung 12 besteht das Säschar aus zwei Halbschalen 25, 26 mit jeweils halbkreisförmigem Querschnitt. Diese gehen in den unteren Teil der Saatgutführung 12 über, wobei der Leitflügel 14 an der Halbschale 25 und das Leitorgan 20 an der Halbschale 26 angeformt sind.

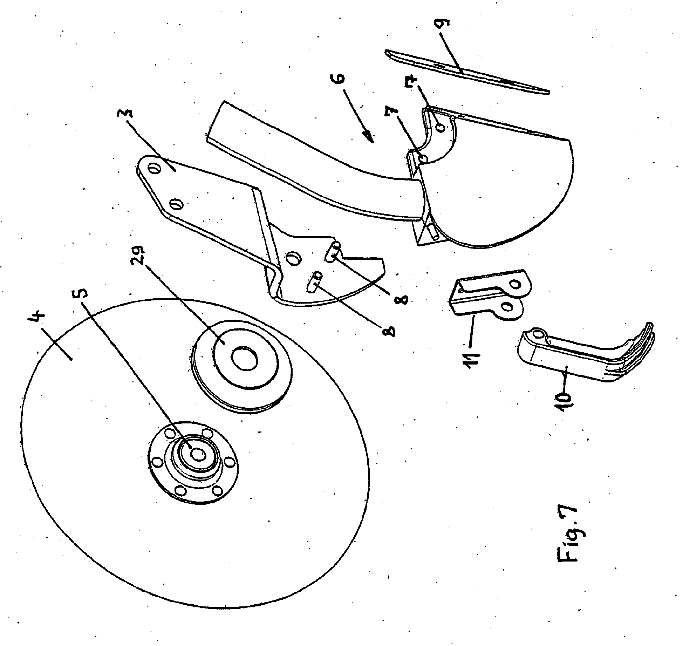

An der Außenkontur der Saatgutführung im Bereich des Leitflügels 14 sind zwei Zapfen 27, 28 mit Abstand angeformt, auf die der in Figur 1 wiedergegebene Lagerbock 11 für die Schwenklagerung der Rücklaufsperre 10 befestigt ist (siehe auch Figur 7).

Wie aus Figur 7 weiterhin ersichtlich, ist der Lagerflansch 5 der Scharscheibe 4 von einer Schutzkappe 29 abgedeckt, um das Aufwickeln von Pflanzenresten auf dem Lagerzapfen und dem Lagerflansch zu verhindern.

**Bezugszeichenliste**

| | | | |
|---|---|---|---|
| 1 | Scharträger | 16 | Abstreiferkante |
| 2 | Profil | 17 | Fahrtrichtung |
| 3 | Scharhalter | 18 | Abstreiferspitze |
| 4 | Scharscheibe | 19 | Zapfen |
| 5 | Lagerflansch | 20 | Leitorgan |
| 6 | Säschar | 21 | Auslauföffnung |
| 7 | Bohrungen | 22 | Leitfläche |
| 8 | Zapfen | 23 | Außenkante |
| 9 | Abstreifer | 24 | Trennfuge |
| 10 | Rücklaufsperre | 25 | Halbschale |
| 11 | Lagerbock | 26 | Halbschale |
| 12 | Saatgutführung | 27 | Zapfen |
| 13 | Rohrabschnitt | 28 | Zapfen |
| 14 | Leitflügel | 29 | Schutzkappe |
| 15 | Außenkante | 30 | Außenkontur |

## Patentansprüche

1. Sämaschine zum reihenweise Einbringen von Saatgut in den Boden mit einer sich quer zur Fahrtrichtung einer Zugmaschine, z.B. eines Traktors, erstreckenden Scharschiene, daran entsprechend dem Reihenabstand angebrachten Scharträgern (3) und an deren Enden angeordneten Scheibenscharen, von denen jedes aus einer drehbar gelagerten, zur Fahrtrichtung winklig angestellten, gewölbten oder konischen Scharscheibe (4) zur Bildung einer Säfurche und einem feststehenden Säschar (6) besteht, das an seinem furchenfernen Ende mit einem Särohr zusammenwirkt und eine das Saatgut in die Säfurche leitende Saatgutführung (12) aufweist, wobei das Säschar (6) derart angeordnet und ausgebildet ist, dass seine bodennahen Teile zumindest bis in Höhe der Eindringtiefe der Scharscheibe (4) in den Boden über eine auf eine zur Fahrtrichtung senkrechte Ebene projizierte Fläche der angestellten Scharscheibe nicht hinausragen, wobei die Saatgutführung (12) bis etwa zum furchenbildenden Scheitel der Scharscheibe (4) reicht, und das Säschar (6) einen die Auslauföffnung (21) der Saatgutführung (12) an der der Scharscheibe (4) gegenüberliegenden Seite gegen das Erdreich schützenden und das Saatgut auf die Sohle der Säfurche führenden Leitflügel (14) aufweist, **dadurch gekennzeichnet, dass** die Saatgutführung (12) an ihrem unteren Ende im Bereich des Aufstandpunktes der Scharscheibe (4) in einer Spitze ausläuft und nur nach unten und entgegen der Fahrtrichtung offen ist und von ihrem spitz zulaufenden Ende nahe dem Aufstandpunkt der Scharscheibe (4) ausgehend eine auf einem degressiven Radius bezüglich der Drehachse (19) der Scharscheibe (4) liegende Außenkontur (30) aufweist.

2. Sämaschine nach Anspruch 1, **dadurch gekennzeichnet, dass** die Saatgutführung (12) einen oberen, mit dem Särohr zusammenwirkenden rohrförmigen Abschnitt (13) aufweist, der über einen im Wesentlichen kontinuierlich gekrümmten Bogen zum spitz zulaufenden Ende verläuft.

3. Sämaschine nach Anspruch 1 oder 2, **dadurch gekennzeichnet, dass** die Saatgutführung (12) von ihrem nahe dem Aufstandpunkt der Scharscheibe (4) befindlichen spitz zulaufenden Ende ausgehend schräg angeschnitten ist, so dass sich eine Auslauföffnung (21) bildet, die einen von dem spitz zulaufenden Ende entlang der Außenkontur der Saatgutführung (12) kontinuierlich erweiternde und schließlich durch einen elliptischen Bogen geschlossenen Umriss aufweist.

4. Sämaschine nach einem der Ansprüche 1 bis 3, **dadurch gekennzeichnet, dass** die Saatgutführung (12) im Bereich ihres der Fahrtrichtung (17) zugekehrten vorderen unteren Endes innenseitig eine zum spitz zulaufenden Ende führende, ebene Leitfläche (22) für das Saatgut aufweist.

5. Sämaschine nach einem der Ansprüche 1 bis 4, **dadurch gekennzeichnet, dass** die Scharscheibe (4) vertikal steht und der Anstellwinkel der Scharscheibe (4) zur Fahrtrichtung (17) maximal etwa 10° beträgt.

## Claims

1. Sowing machine for sowing seeds in rows in the ground, with a coulter rail extending transversely with respect to the direction of travel of a towing machine, for example a tractor, coulter carriers (3) which are attached to the coulter rail in a manner corresponding to the row spacing and disc-type coulters which are arranged at the ends of said coulter carriers and each of which consists of a rotatably mounted, curved or conical coulter disc (4) which is set at an angle with respect to the direction of travel and is intended for forming a sowing furrow and a fixed sowing coulter (6) which, at the furrow-remote end thereof, interacts with a sowing tube and has a seed guide (12) guiding the seeds into the sowing furrow, wherein the sowing coulter (6) is arranged and designed in such a manner that the parts thereof which are close to the ground, at least to the level of the penetration depth of the coulter disc (4) into the ground, do not project beyond a surface of the positioned coulter disc, which surface is projected onto a plane perpendicular to the direction of travel, wherein the seed guide (12) reaches approximately as far as the furrow-forming apex of the coulter disc (4), and the sowing coulter (6) has a guide vane (14) which protects the outlet opening (21) of the seed guide (12) from the soil on the side opposite the coulter disc (4) and guides the seeds onto the base of the sowing furrow, **characterized in that** the seed guide (12) ends at its lower end in a tip in the region of the contact point of the coulter disc (4) and is only open downwards and counter to the direction of travel and, starting from its tapering end in the vicinity of the contact point of the coulter disc (4), has an outer contour (30) lying on a decreasing radius with respect to the axis of rotation (19) of the coulter disc (4).

2. Sowing machine according to Claim 1, **characterized in that** the seed guide (12) has an upper, tubular section (13) which interacts with the sowing tube and runs via a substantially continuously curved arc to the tapering end.

3. Sowing machine according to Claim 1 or 2, **characterized in that** the seed guide (12) is trimmed obliquely starting from its tapering end in the vicinity of the contact point of the coulter disc (4), thus forming an outlet opening (21) which has an outline which widens continuously from the tapering end along the outer contour of the seed guide (12) and is finally closed by an elliptical arc.

4. Sowing machine according to one of Claims 1 to 3, **characterized in that** the inside of the seed guide (12) has, in the region of its front, lower end facing the direction of travel (17), a flat guide surface (22) for the seeds, said guide surface leading to the tapering end.

5. Sowing machine according to one of Claims 1 to 4, **characterized in that** the coulter disc (4) is vertical, and the coulter disc (4) is set at an angle of at maximum approximately 10° with respect to the direction of travel (17).

## Revendications

1. Machine à semer destinée à l'introduction en rangée de semences dans le sol, avec une trémie s'étendant transversalement à la direction d'avancée d'une machine à traction, par exemple d'un tracteur, des supports de soc (3) placés au niveau de ladite trémie en fonction de l'écartement des rangs et des socs à disque disposés au niveau de chacune de leurs extrémités, dont chacune se compose d'un disque de soc (4) bombé ou conique disposé de façon à pouvoir pivoter et placé selon un certain angle par rapport à la direction d'avancée pour former un sillon ainsi que d'un soc à semer (6) fixe interagissant, au niveau de son extrémité éloignée du sillon, avec un tube à semer et comportant un guide-semences (12) guidant les semences dans le sillon, le soc à semer (6) étant conçu et disposé de telle sorte que ses parties proches du sol ne ressortent pas au-dessus d'une surface, projetée sur un plan perpendiculaire à la direction d'avancée, du disque de soc utilisé, au moins jusqu'à hauteur de la profondeur d'introduction du disque de soc (4) dans le sol, le guide-semences (12) atteignant approximativement la raie formant le sillon du disque de soc (4) et le soc à semer (6) comportant une aile conductrice (14) protégeant l'ouverture éjectrice (21) du guide-semences (12) au niveau du côté opposé au disque de soc (4) contre la terre et introduisant les semences sur le fond du sillon, **caractérisée en ce que** le guide-semences (12) sort en une pointe au niveau de son extrémité inférieure, dans la région du point de soulèvement du disque de soc (4) et n'est ouvert que vers le bas et à l'encontre de la direction d'avancée et comporte, en partant de son extrémité pointue située à proximité du point de soulèvement du disque de soc (4), un contour extérieur (30) reposant sur un rayon dégressif par rapport à l'axe de rotation (19) du disque de soc (4).

2. Machine à semer selon la revendication 1, **caractérisée en ce que** le guide-semences (12) comporte une section (13) supérieure en forme de tube entrant en interaction avec le tube à semer, ladite section s'étendant sur une extrémité s'étendant pour l'essentiel en forme d'arc coudé en continu par rapport à la pointe.

3. Machine à semer selon la revendication 1 ou 2, **caractérisée en ce que** le guide-semences (12) est entamé en oblique en partant de son extrémité pointue située à proximité du point de soulèvement du disque de soc (4), de façon à former une ouverture éjectrice (21) s'élargissant en continu à partir de l'extrémité pointue, le long du contour extérieur du guide-semences (12), puis comportant un contour fermé par un arc elliptique.

4. Machine à semer selon l'une quelconque des revendications 1 à 3, **caractérisée en ce que** le guide-semences (12) comporte, dans la région de son extrémité inférieure avant orientée vers la direction d'avancée (17), du côté intérieur, une surface conductrice (22) plane conduisant à l'extrémité pointue, ladite surface étant prévue pour les semences.

5. Machine à semer selon l'une quelconque des revendications 1 à 4, **caractérisée en ce que** le disque de soc (4) se tient verticalement et que l'angle d'attaque du disque de soc (4) est au maximum approximativement de 10° par rapport à la direction d'avancée (17).
